# EUROPEAN PATENT SPECIFICATION

(11) **EP 2 465 764 B1**
(45) Date of publication and mention of the grant of the patent: **22.04.2015**
(21) Application number: 11193570.6
(22) Date of filing: 14.12.2011
(51) Int. Cl.: B63B 35/40, B63B 35/00, B63B 27/00, B63B 9/00

(54) **Spar hull load out method**
Sparrumpf-Ausladeverfahren
Procédé de déchargement de coque de spar

(30) Priority: 14.12.2010 US 422712 P; 07.12.2011 US 201113313185
(43) Date of publication of application: 20.06.2012
(73) Proprietor: J. Ray McDermott, S.A., Houston, Texas 77079-4526 (US)
(72) Inventor: Haney, James A., Houston, Texas 77096 (US); Leow, Bee-Lay, Katy, Texas 77450 (US)
(74) Representative: Meldrum, David James

(56) References cited:
- WO-A2-2004/000636
- WO-A2-2010/109243
- GB-A- 1 264 074
- US-A- 3 680 512
- US-A- 4 345 536

## Description

### Priority Claim

This apptication claims priority from Provisional Application number 61/422,712 filed December 14. 2010.

### Field and Background

The invention is generally related to floating offshore structures and more particularly, but not exclusively, to the load out, float off, and channel tow of a spar type hull.

There are a number of spar hull designs available in the offshore drilling and production industry. These include the truss spar, classic spar, and cell spar. The term spar hull structure described herein refers to any floating structure platform, which those of ordinary skill in the offshore industry will understand as any floating production and/or drilling platform or vessel having an open centerwell configuration.

The spar supports a topside structure and comprises a hard tank, truss section, and a soft tank. In the case of the classic spar, the hard tank and soft tank are connected by a cylinder instead of a truss. The hard tank supplies the majority of the buoyancy to support the hull structure, risers, and topsides. The hard tank is divided into a number of chambers among which the ballast water can be shifted to control the spar's buoyancy and stability.

When the spar is placed in its operating configuration offshore, the spar cylinder is exposed to currents in the ocean. The current acting on the spar cylinder produces VIV (vortex induced vibration). Because the VIV can produce unacceptable motions of the spar, helical strakes are added to the cylindrical portion of the spar as a means of eliminating or reducing the VIV. The strakes extend outwardly from the hard tank and are attached in a helical pattern around the hard tank. The fact that helical strakes reduce VIV is well known in the offshore industry.

The hard tanks of a spar can be as much as 150 feet in diameter. To be effective the strakes must extend outward from the hull a distance of 12 - 15% of the hull diameter. The strakes add significantly to the outside diameter of the hard tank without adding much buoyancy. Spars are built lying on their sides, loaded out onto HLV's (Heavy Lift Vessels) on their sides, and floated off into the water on their sides. Therefore, on the larger diameter spars there is not sufficient water depth near the fabrication yard to provide bottom clearance for the strake tips. Since the float off operation is very sensitive to sea states, the spars must be floated off the HIV in protected water near the fabrication yard.

When the HLV is ballasted downward to float off the spar, the HLV with the spar on board goes through a minimal stability when the deck of the HLV goes awash. This occurs because the HLV loses most of its water plane area when its deck goes awash, and the spar is not yet picking up much water plane area, Traditionally, the problem has been solved with two methods. First, the HLV is trimmed by the stern so that the soft tank of the spar picks up some water plane area, before the HLV deck goes awash. Second, supplementary stability modules are added to the HLV deck to improve stability.

Frequently, after the spar is floated off the HLV in protected water the spar must be moved alongside the fabrication yard quay to perform additional work. Once the spar is completed it must be towed down the channel to the open sea, However, there is insufficient water depth at quayside to provide strake tip clearance, and there is insufficient strake tip bottom clearance in the channel leading from the fabrication yard to the open sea.

One method of solving the clearance problem is to install a portion of the strakes at sea. That way, the strakes do not project below the "belly" of the hard tank during the movement of the spar to quayside, or during the channel tow. This method has been tried once, and was found to be more difficult and expensive than expected.

The weight and vertical center of gravity of a large diameter spar are too great for load out and float off by existing HLV's. The solution has been to build the spar in two pieces, then load out and transport each piece separately, float off the individual pieces, and then join them as they float on their sides in protected water. However, this adds expense and difficulty to the construction of the spar and is not a favored solution.

Thus, it can be seen that there is a need for an improved method for load out and transport to the open sea of a spar type structure.

WO2004/000636 A2 describes a method and apparatus for transporting or storing compressed natural gas in a marine environment which method includes the providing of a heavy lift vessel that has a weather deck area that is bounded by forward and aft, port and starboard sides or walls that extend above the weather deck. A buoyant module is provided that contains a pipeline, the pipeline including multiple bends and multiple layers. The pipeline is supported at differing elevations within the module interior so that the various sections of the pipeline are preferably spaced apart to enable visual and/or remote exterior inspection (e.g. video, radar, x-ray, acoustic, or other exterior, non-destructive test) of the outer surface of the pipeline. The pipeline has a continuous bore that is piggable for internal inspections. The module can be transferred to a heavy lift vessel or can be used as flotation. The combination of heavy lift vessel and module can travel to a selected location for loading and unloading compressed natural gas. The module can be placed in a marine environment to serve as a storage facility for compressed natural gas.

WO2010/109243 A2 describes a submersible barge and a method of its use for handling a submersible item and transferring it to and from the barge underwater. The barge has a deck for supporting the item, at least two columns spaced apart on the deck and a buoyancy control system. The buoyancy control system controls the submerging of the deck of the barge to permit transfer of the item to or from the deck while the item is submerged. The barge is useful for facilitating delivery of large and heavy submersible items to an underwater location, or for recovering them. Transferring the item onto the deck of the submersible barge wherein the deck and the item are both submerged allows a more stable transfer. The deck is typically supported in the water by buoyancy in the deck and in the columns.

### Summary

Particular aspects of the invention are set out in independent claims 1 and 9, with optional embodiments set out in dependent claims 2 to 8.

The present invention has been made in view of the shortcomings in the known art. Accordingly, the present approaches are drawn to a method and apparatus that yields sufficient bottom clearance for the strake tips of a large diameter spar. In addition, the present approaches make it possible to load out and float off a large diameter spar in one piece using existing HLV's. The present approaches also apply to the load out of other structures such as a deck.

Viewed from one aspect, a U-tank is placed between the stern of an HLV and a fabrication yard quay. The U-tank is equipped with load out ways. During load out the spar skids along the U-tank ways onto the HLV. The spar ends up partly on the HLV and partly on the U-tank. The U-tank artificially extends the length of the HLV and provides supplemental buoyancy and water plane area that enables existing HLV's to lift the spar off the fabrication yard ways during load out.

After load out onto the HLV and U-tank, the spar assembly is moved to a float off site nearby. The site has sufficient water depth for a float off. Most float off sites near a fabrication yard in protected water would require that a pit be dredged to provide the required water depth. The HLV will be ballasted downward to float the spar off the HLV. The U-tank provides enough supplemental buoyancy and water plane area to enable the float off.

After the departure of the HLV and while the spar is still at the float off site, the U-tank is relocated and placed beneath a frame that cantilevers from the top end of the hard tank. The U-tank is ballasted upward to lift the spar. Lifting the spar reduces its draft and provides the strake tip bottom clearance required to move the spar alongside the fabrication yard quay, and subsequently, for the channel tow.

Various features and combinations therefor provided by the present teachings are pointed out with particularity in the claims annexed to and forming a part of this disclosure. For a better understanding of the teachings, their operating advantages and specific objects attained by their uses, reference is made to the accompanying drawings and descriptive matter in which examples are illustrated.

### Brief Description of the Drawings

In the accompanying drawings, forming a part of this specification, and in which reference numerals shown in the drawings designate like or corresponding parts throughout the same:

FIG. 1 is a perspective view of a spar lying on its side in a fabrication yard.

FIG. 2 is a perspective view that shows the U-tank alongside the quay.

FIG. 3 is a perspective view of the spar, U-tank, and HLV ready for load out.

FIG. 4 is a perspective view of the spar, U-tank, and HLV at the completion of load out.

FIG. 5 is a perspective view of the spar, U-tank, and HLV at the completion of load out with the U-tank in a position further aft.

FIG. 6 is a perspective view of the spar, U-tank, and HLV assembly positioned over a dredged pit at the float off site.

FIG. 7 is a perspective view of the spar and U-tank assembly floated off the HLV.

FIG. 8 is a perspective view of the spar and U-tank over the dredged pit with the HLV ballasted up and under way.

FIG. 9 is a perspective view of the spar over the deep pit.

FIG. 10 is a perspective view of the spar over the deep pit with the U-tank on its way to the top of the hard tank.

FIG. 11 is a perspective view of the spar over the deep pit with the U-tank on its way to the top end of the hard tank.

FIG. 12 is a perspective view of the spar over the deep pit with the U-tank placed beneath the frame cantilevered off the top of the hard tank.

FIG. 13 is a perspective view of the spar alongside the quay.

FIG. 14 is a perspective view of the spar underway, headed down the channel to the open sea.

While the present teachings are susceptible to various modifications and alternative forms, specific embodiments are shown by way of example in the drawings and are herein described in detail. It should be understood, however, that drawings and detailed description thereto are not intended to limit the invention to the particular form disclosed, but on the contrary, the invention is to cover all modifications, equivalents and alternatives falling within the spirit and scope of the present invention as defined by the appended claims.

### Description

The present teachings provide a sequence of positions and operations of a U-tank acting in concert with an HLV.

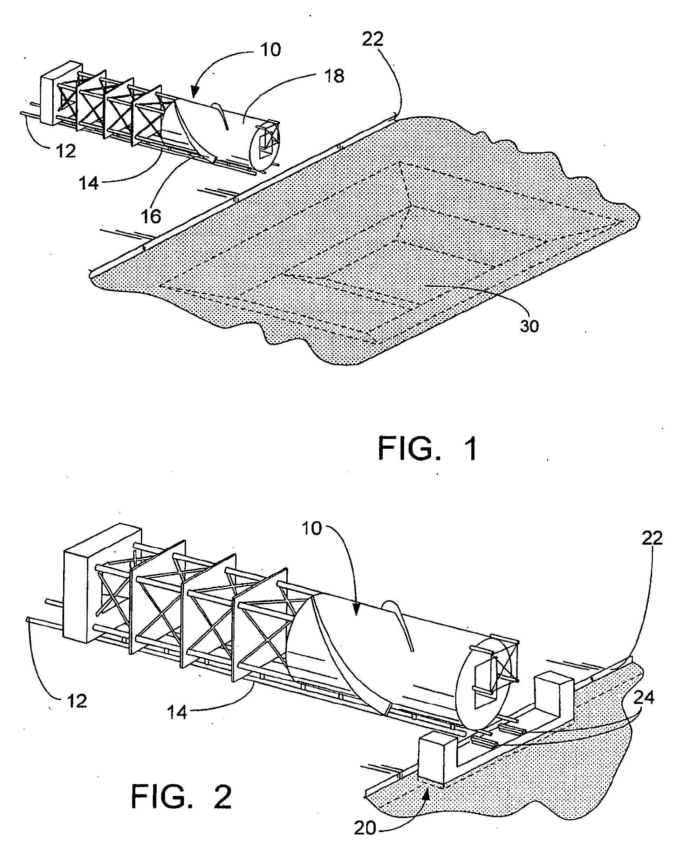

As seen in Fig. 1, a spar 10 is shown on ways 12 ready for load out and perpendicular to a quay 22. The spar 10 is built on a cradle structure (not shown because it is obscured by the spar 10 in this view) that extends most of the length of the spar 10. Two parallel load out runners 14 are framed into the cradle. These runners 14 rest directly on the load out ways 12. Both the spar 10 and its cradle are loaded out together, the cradle runners 14 sliding along the load out ways 12.

Strakes 16 of the spar 10 are shown as being incomplete on the bottom side of the hard tank 18. It should be understood that "incomplete", in the offshore industry, may mean that the strakes on the bottom side of the hard tank are partial strakes that extend outward from the hard tank 18 only a portion of the specified distance as indicated above and the remainder of the strake will be installed after the spar 10 is in the water. It can also mean that no strakes are attached to the bottom of the hard tank 18 while it is on land and that this portion of the strakes will be attached after the spar 10 is in the water.

As seen in Fig. 2, a purpose-built U-tank 20 (U-shaped tank) is moored alongside the quay 22. The U-tank 20 has skid beams 24 that allow the skidding of the spar 10 over the U-tank 20. The U-tank is shown with stability columns at each end and it is compartmented and outfitted with a power supply and a ballast system. To give a notion of scale, for a large diameter spar the U-tank would be roughly 350 feet long by 50 feet wide with 65 foot high stability columns on each end, and a net buoyancy force of 10,000 short tons.

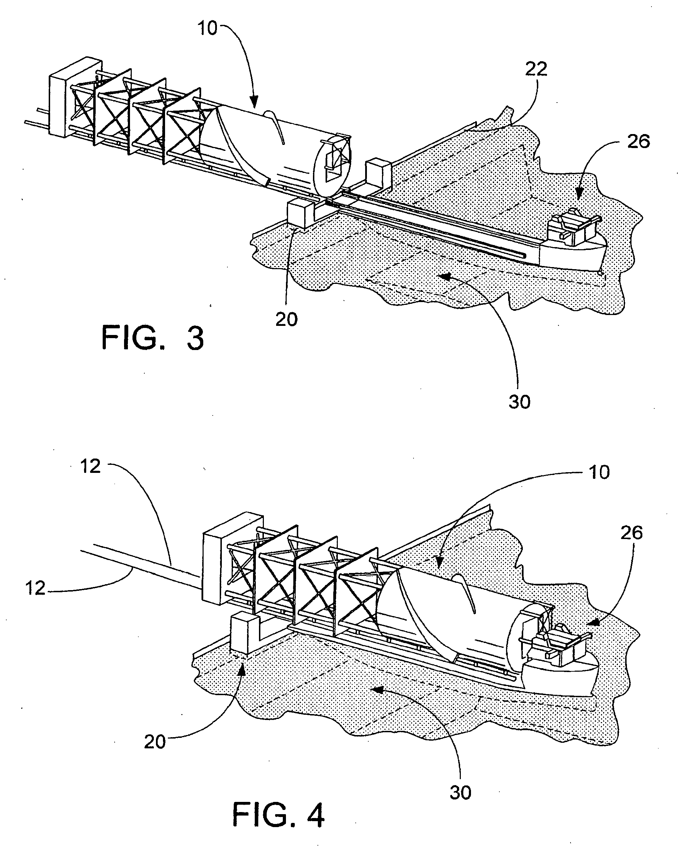

As seen in Fig. 3, an HLV 26 is moored with its stern against the U-tank 20. The HLV 26 by itself does not have sufficient buoyant force or global hogging strength to lift the spar 10 off the fabrication yard ways 12 during the load out. Stability columns ordinarily present on the HLV 26 have been removed to allow the spar 10 to load out on the centerline of the HLV 26.

As seen in Fig. 4, the spar 10 has been loaded out over the U-tank 20 onto the HLV 26. During the load out the U-tank 20 and the HLV 26 are ballasted in concert to keep the assembly stable and prevent structural overload of the HLV 26 during all stages of the load out.

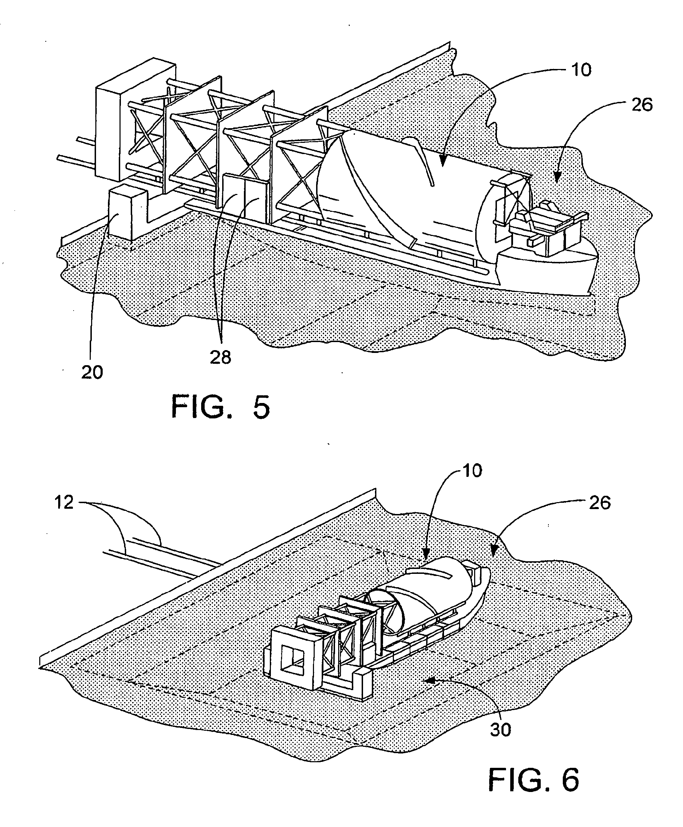

As seen in Fig. 5, both stability columns 28 of the HLV 26 have been placed on one side of the HLV 26. The U-tank 20 may be located further aft, as shown here, depending on the results of detailed requirements and analyses for a particular spar and HLV.

As seen in Fig. 6, the U-tank 20, spar 10, and HLV 26 are moved to be located over a dredged pit 30 at the float off site.

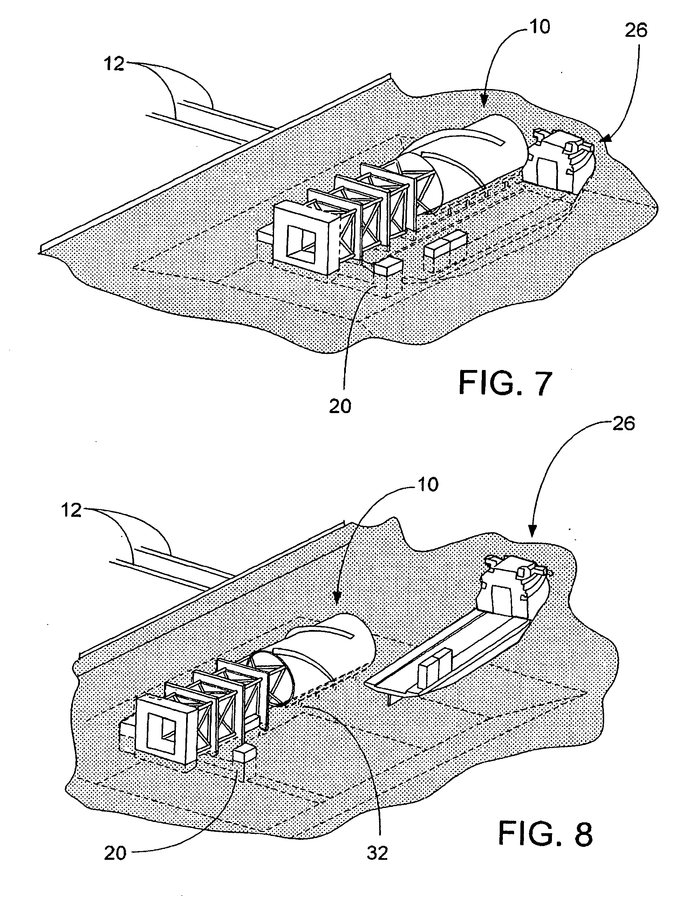

As seen in Fig. 7, the HLV 26 has been ballasted downward until the spar 10 and U-tank 20 have floated free of the HLV 26. The HLV 26 is shown part way through the lateral separation. During ballasting the U-tank 20 supplies the supplementary water plane area that keeps the assembly stable as the deck of the HLV 26 goes awash. Once the spar 10 floats free, the HLV 26 and spar 10 are separated laterally.

As seen in Fig. 8, the HLV 26 has been ballasted up and is departing. The cradle 32 is a complicated structure, but is represented here by stubs on the bottom side of the hard tank for ease of illustration purposes. The cradle 32 provides a small buoyant force against the spar 10 that keeps the cradle 32 in place.

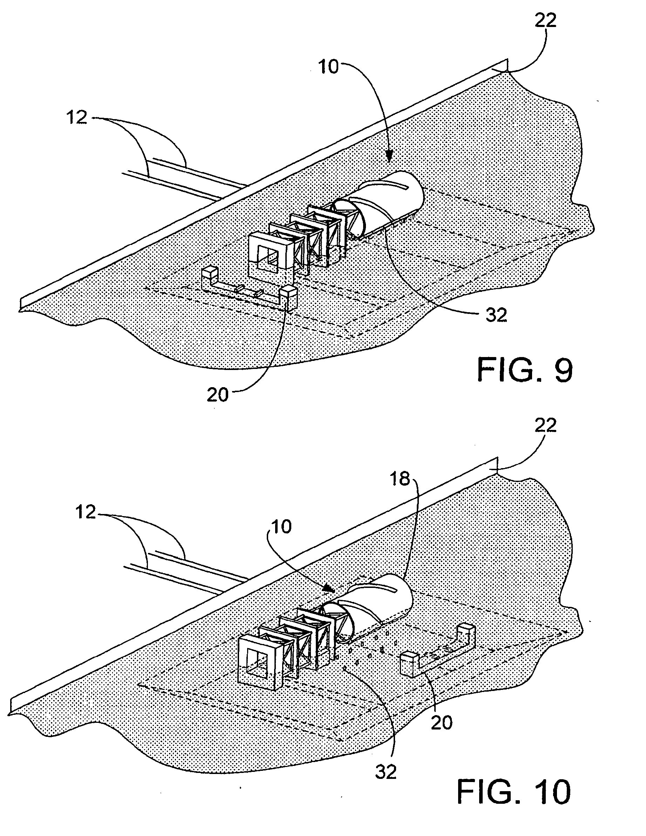

As seen in Fig. 9, the U-tank 20 has been ballasted downward relative to the spar 10 and has been separated longitudinally from the spar 10. Before the separation of the spar 10 and the U-tank 20 the spar 10 is ballasted downward to provide sufficient stability to prevent unexpected rolling of the spar 10.

As seen in Fig. 10, the U-tank 20 is about half way through its relocation to the top of the hard tank 18. The cradle 32 has been detached from the spar 10, flooded, and sunk to the bottom of the dredged pit 30. The cradle 32 is represented by an array of stubs. Subsequently, the cradle 32 will be ballasted up and recovered.

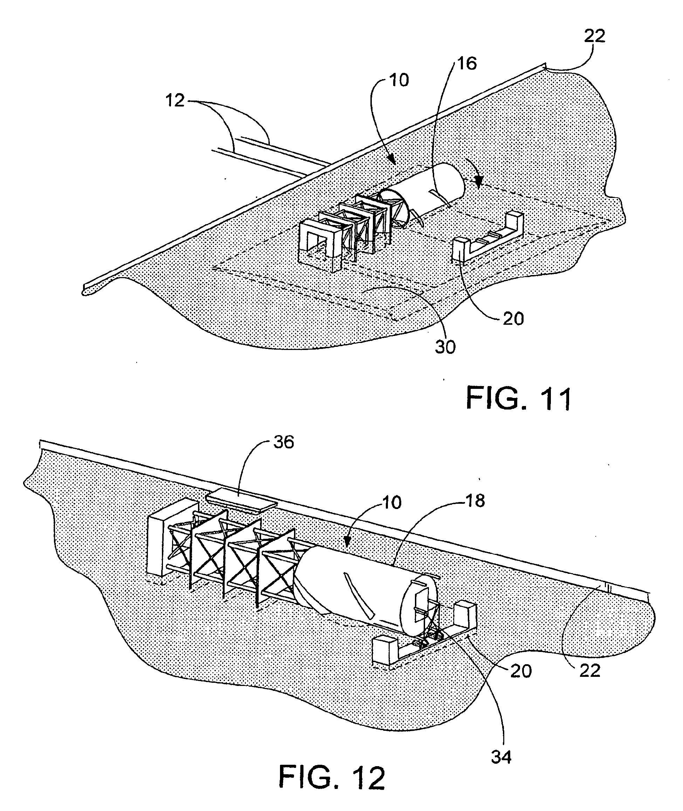

As seen in Fig. 11, the spar 10 has been rolled by sequential ballasting to place the portion of the hard tank 18 with incomplete strakes out of the water on the top side. Since the previously completed strakes 16 are now on the bottom side, this operation must be done in the water over the dredged pit 30 to provide sufficient strake tip bottom clearance.

As seen in Fig. 12, the U-tank 20 has been placed under a frame 34 cantilevered off the top end of the hard tank 18. The U-tank 20 is then ballasted upward to lift the spar 10 and reduce the draft of the spar 10. A spacer barge 36 is shown in the back ground alongside the quay 22. It should be understood that this is only one possibility for supporting the hard tank 18 on the U-tank 20 and that other variations of the frame 34 may be used. One example is the frame 34 being initially attached to the U-shaped tank 20 before engagement with the hard tank18.

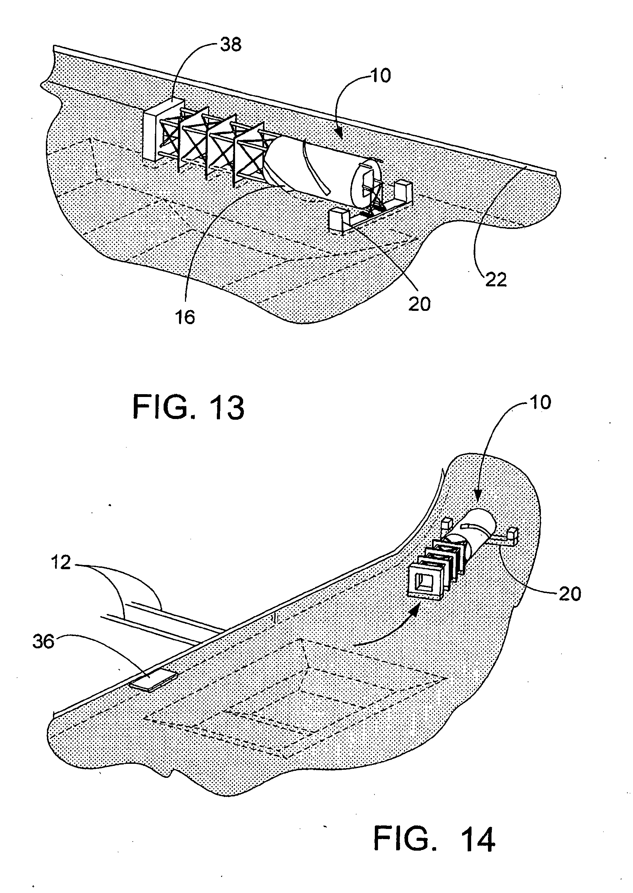

As seen in Fig. 13, the spar 10 with its reduced draft is moved alongside the quay 22. The spar soft tank 38 is moored against the spacer barge 36 at one end and the U-tank 20 is moored against the quay 22 at the top end of the spar 10. In this position the incomplete strakes and any other work are completed and the spar 10 is made ready to depart.

As seen in Fig. 14, the spar 10 is then towed down the channel to the open sea. The lift of the U-tank 20 is required for the channel tow to reduce the draft of the spar 10, which results in sufficient strake tip bottom clearance.

After the channel tow the U-tank 20 is separated from the spar 10 in a good weather operation at a near shore location. First, the spar 10 is ballasted for the wet tow to the Installation site and then the U-tank is ballasted down until the spar 10 floats free. The U-tank 20 is separated longitudinally from the spar 10 and towed back to the fabrication site.

It should be understood that the method may also be accomplished by separating the U-tank 20 from the spar 10 and the HLV 26 at the Initial load out site of the spar 10, once the spar 10 has been loaded onto the HLV 26. The HLV 26 may then be used to transport the spar 10 to a different, desired site for separation from the HLV 26 and further work on the strakes 16. Once at the new site, the U-tank 20 is reattached to the spar 10 and HLV 26 and the operation is carried out as described above.

In the configuration and operational sequence illustrated, the U-tank enhances the lifting capacity and stability of existing HLV's so that they can be used to load out and float off large diameter spars fabricated in one piece. The same U-tank is used to lift the spar after it it floated off the HLV to reduce its draft so that the channel tow to open sea can be made.

The major advantage offered by the presently described innovative method of using the U-shaped tank is that the larger spar structures can be loaded out and floated off using one of several existing HLV's; Then the same U-shaped tank can be used to reduce the draft of the spar so that the strakes can be completed and the channel tow to open sea made with completed strakes. Thus, the presently described innovative method provides a capability which did not previously exist.

While specific embodiments and/or details of the invention have been shown and described above to illustrate the application of the principles of the invention, it is understood that this invention may be embodied as more fully described in the claims, including any element which is equivalent to an element specified in the claims.

## Claims

1. A method for load out of a spar type structure, comprising the steps:
a. positioning a spar structure (10) on land perpendicular to a quay, the spar having first and second ends and strakes (16) installed around a portion of the spar;
b. mooring a floating U-shaped tank (20) alongside the quay and aligned with the spar;
c. mooring a heavy lift vessel (26) against the U-shaped tank;
d. moving the spar onto the U-shaped tank and heavy lift vessel such that the U-shaped tank supports the first end of the spar and the heavy lift vessel supports the remainder of the spar;
e. moving the heavy lift vessel, U-shaped tank, and spar over water having sufficient depth to allow float off of the spar;
f. ballasting the heavy lift vessel and U-shaped tank downward, causing float off of the spar,
g. separating the U-shaped tank from the spar and moving the heavy lift vessel and U-shaped tank from under the spar;
h. rotating the floating spar 180 degrees around its central axis;
i. attaching the U-shaped tank to the second end of the spar and ballasting the U-shaped tank upward to reduce the draft of the spar; and
j. completing the strakes around the spar.

2. The method of claim 1, further comprising, during step d, preventing structural overload of the heavy lift vessel and stabilizing the spar by ballasting the heavy lift vessel and U-shaped tank.

3. The method of claim 1 or 2, further comprising installing a stability column on the heavy lift vessel after step d.

4. The method of claim 1, 2 or 3, further comprising ballasting the spar downward before the U-shaped tank is separated from the spar.

5. The method of any preceding claim, wherein step h of rotating the spar 180 degrees is accomplished by sequential ballasting.

6. The method of any preceding claim further comprising ballasting the heavy lift vessel and U-shaped tank while moving the spar onto the U-shaped tank and heavy lift vessel.

7. The method of any preceding claim, further comprising ballasting the spar downward before the U-shaped tank is separated from the spar.

8. The method of any preceding claim, wherein step i of rotating the spar is accomplished by sequential ballasting.

9. A method for load out of a spar type structure, comprising the steps:
a. positioning a spar structure (10) on and perpendicular to a quay, the spar having first and second ends and strakes (16) installed around a portion of the spat;
b. mooring a floating U-shaped tank (20) alongside the quay and aligned with the spar;
c. mooring a heavy lift vessel (26) against the U-shaped tank;
d. moving the spar onto the U-shaped tank and heavy lift vessel such that the U-shaped tank supports the first end of the spar and the heavy lift vessel supports the remainder of the spar;
e. moving the heavy lift vessel, U-shaped tank, and spar over water having sufficient depth to allow separation of the U-shaped tank from fhe heavy lift vessel,
f. separating the U-shaped tank from the heavy lift vessel,
g. transporting the spar on the heavy lift vessel and the U-shaped tank separately to a desired site;
h. placing the U-shaped tank beneath the spar and ballasting upward to make contact with the spar;
i. ballasting the heavy lift vesse and U-shaped tank downward, causing float off of the spar;
j. separating the U-shaped tank from the spar and moving the heavy lift vessel and U-shaped tank from under the spar;
k. rotating the floating spar 180 degrees around its central axis;
l. attaching the U-shaped tank to the second end of the spar and ballasting the U-shaped tank upward to reduce the draft of the spar; and
m. completing the strakes around the spar.

## Patentansprüche

1. Verfahren zum Ausladen einer Spierenstruktur, umfassend die Schritte:
a. Anordnen einer Spierenstruktur (10) an Land senkrecht zu einem Kai, wobei die Spiere ein erstes und ein zweites Ende und Planken (16) aufweist, die um einen Abschnitt der Spiere angebracht werden;
b. Festmachen eines schwimmenden U-förmigen Behälters (20) entlang des Kais, der mit der Spiere ausgerichtet ist;
c. Festmachen eines Schwerlastwasserfahrzeugs (26) am U-förmigen Behälter;
d. Bewegen der Spiere auf den U-förmigen Behälter und das Schwerlastwasserfahrzeug, so dass der U-förmige Behälter das erste Ende der Spiere abstützt und das Schwerlastwasserfahrzeug den Rest der Spiere abstützt;
e. Bewegen des Schwerlastwasserfahrzeugs, des U-förmigen Behälters und der Spiere über Wasser mit ausreichender Tiefe, um das Wegschwemmen der Spiere zu ermöglichen;
f. Füllen des Schwerlastwasserfahrzeugs und des U-förmigen Behälters nach unten, sodass die Spiere weggeschwemmt wird;
g. Trennen des U-förmigen Behälters von der Spiere und Bewegen des Schwerlastwasserfahrzeugs und des U-förmigen Behälters von unterhalb der Spiere;
h. Drehen der schwimmenden Spiere um 180 Grad um ihre Mittelachse;
i. Befestigen des U-förmigen Behälters an einem zweiten Ende der Spiere und Füllen des U-förmigen Tanks nach oben zum Reduzieren des Abdriftens der Spiere; und
j. Abschließen der Planken um die Spiere.

2. Verfahren nach Anspruch 1, ferner umfassend, während Schritt d, das Verhindern einer strukturellen Überlastung des Schwerlastwasserfahrzeugs und Stabilisieren der Spiere durch Füllen des Schwerlastwasserfahrzeugs und des U-förmigen Behälters.

3. Verfahren nach Anspruch 1 oder 2, ferner umfassend das Anbringen einer Stabilitätssäule auf dem Schwerlastwasserfahrzeug nach Schritt d.

4. Verfahren nach Anspruch 1, 2 oder 3, ferner umfassend das Füllen der Spiere nach unten, bevor der U-förmige Behälter von der Spiere getrennt wird.

5. Verfahren nach einem der vorhergehenden Ansprüche, wobei Schritt h des Drehens der Spiere um 180 Grad durch sequentielles Füllen erreicht wird.

6. Verfahren nach einem vorhergehenden Ansprüche, ferner umfassend das Füllen des Schwerlastwasserfahrzeugs und des U-förmigen Behälters während des Bewegens der Spiere auf den U-förmigen Behälter und das Schwerlastwasserfahrzeug.

7. Verfahren nach einem der vorhergehenden Ansprüche, ferner umfassend das Füllen der Spiere nach unten, bevor der U-förmige Behälter von der Spiere getrennt wird.

8. Verfahren nach einem der vorhergehenden Ansprüche, wobei Schritt i des Drehens der Spiere durch sequentielles Füllen erreicht wird.

9. Verfahren zum Ausladen einer Spierenstruktur, umfassend die Schritte:
a. Anordnen einer Spierenstruktur (11) an Land senkrecht zu einem Kai, wobei die Spiere ein erstes und ein zweites Ende und Planken (16) aufweist, die um einen Abschnitt der Spiere angebracht werden;
b. Festmachen eines schwimmenden U-förmigen Behälters (20) entlang des Kais, der mit der Spiere ausgerichtet ist;
c. Festmachen eines Schwerlastwasserfahrzeugs (26) am U-förmigen Behälter;
d. Bewegen der Spiere auf den U-förmigen Behälter und das Schwerlastwasserfahrzeug, so dass der U-förmige Behälter das erste Ende der Spiere abstützt und das Schwerlastwasserfahrzeug den Rest der Spiere abstützt;
e. Bewegen des Schwerlastwasserfahrzeugs, des U-förmigen Behälters und der Spiere über Wasser mit ausreichender Tiefe, um das Trennen des U-förmigen Tanks von dem Schwerlastwasserfahrzeug zu ermöglichen;
f. Trennen des U-förmigen Behälters von dem Schwerlastwasserfahrzeug;
g. Transportieren der Spiere auf dem Schwerlastwasserfahrzeug und des U-förmigen Behälters separat zu einer gewünschten Stelle;
h. Anordnen des U-förmigen Behälters unter der Spiere und Füllen nach oben, um den Kontakt mit der Spiere herzustellen;
i. Füllen des Schwerlastwasserfahrzeugs und des U-förmigen Behälters nach unten, sodass die Spiere weggeschwemmt wird;
j. Trennen des U-förmigen Behälters von der Spiere und Bewegen des Schwerlastwasserfahrzeugs und des U-förmigen Behälters von unterhalb der Spiere;
k. Drehen der schwimmenden Spiere um 180 Grad um ihre Mittelachse;
l. Befestigen des U-förmigen Behälters an einem zweiten Ende der Spiere und Füllen des U-förmigen Tanks nach oben zum Reduzieren des Abdriftens der Spiere; und
m. Abschließen der Planken um die Spiere.

## Revendications

1. Procédé pour décharger une structure de type spar, comprenant les étapes suivantes :
a. positionner une structure de spar (10) sur terre perpendiculairement à un quai, la spar ayant des première et deuxième extrémités et des virures (16) installées autour d'une portion de la spar ;
b. amarrer un réservoir flottant en forme de U (20) le long du quai et aligné avec la spar ;
c. amarrer un vaisseau de levage lourd (26) contre le réservoir en forme de U ;
d. déplacer la spar sur le réservoir en forme de U et le vaisseau de levage lourd de telle sorte que le réservoir en forme de U supporte la première extrémité de la spar et que le vaisseau de levage lourd supporte le reste de la spar ;
e. déplacer le vaisseau de levage lourd, le réservoir en forme de U et la spar dans de l'eau ayant une profondeur suffisante pour permettre la flottaison de la spar ;
f. ballaster le vaisseau de levage lourd et le réservoir en forme de U vers le bas, pour provoquer la flottaison de la spar ;
g. séparer le réservoir en forme de U de la spar et déplacer le vaisseau de levage lourd et le réservoir en forme de U depuis le dessous de la spar ;
h. faire tourner la spar flottante de 180 degrés autour de son axe central ;
i. attacher le réservoir en forme de U à la deuxième extrémité de la spar et ballaster le réservoir en forme de U vers le haut pour réduire le tirant de la spar ; et
j. finir les virures autour de la spar.

2. Procédé selon la revendication 1, comprenant en outre, au cours de l'étape d, le fait d'empêcher une surcharge structurelle du vaisseau de levage lourd et de stabiliser la spar en ballastant le vaisseau de levage lourd et le réservoir en forme de U.

3. Procédé selon la revendication 1 ou 2, comprenant en outre l'installation d'une colonne de stabilisation sur le vaisseau de levage lourd après l'étape d.

4. Procédé selon la revendication 1, 2 ou 3, comprenant en outre le fait de ballaster la spar vers le bas avant que le réservoir en forme de U ne soit séparé de la spar.

5. Procédé selon l'une quelconque des revendications précédentes, dans lequel l'étape h consistant à faire tourner la spar de 180 degrés est accomplie par ballastage séquentiel.

6. Procédé selon l'une quelconque des revendications précédentes, comprenant en outre le fait de ballaster le vaisseau de levage lourd et le réservoir en forme de U pendant le déplacement de la spar sur le réservoir en forme de U et le vaisseau de levage lourd.

7. Procédé selon l'une quelconque des revendications précédentes, comprenant en outre le fait de ballaster la spar vers le bas avant que le réservoir en forme de U ne soit séparé de la spar.

8. Procédé selon l'une quelconque des revendications précédentes, dans lequel l'étape i consistant à faire tourner la spar est accomplie par ballastage séquentiel.

9. Procédé de déchargement d'une structure de type spar, comprenant les étapes suivantes :
a. positionner une structure de spar (10) sur terre perpendiculairement à un quai, la spar ayant des première et deuxième extrémités et des virures (16) installées autour d'une portion de la spar ;
b. amarrer un réservoir flottant en forme de U (20) le long du quai et aligné avec la spar ;
c. amarrer un vaisseau de levage lourd (26) contre le réservoir en forme de U ;
d. déplacer la spar sur le réservoir en forme de U et le vaisseau de levage lourd de telle sorte que le réservoir en forme de U supporte la première extrémité de la spar et que le vaisseau de levage lourd supporte le reste de la spar ;
e. déplacer le vaisseau de levage lourd, le réservoir en forme de U et la spar dans de l'eau ayant une profondeur suffisante pour permettre la séparation du réservoir en forme de U et du vaisseau de levage lourd,
f. séparer le réservoir en forme de U du vaisseau de levage lourd ;
g. transporter la spar sur le vaisseau de levage lourd et le réservoir en forme de U séparément jusqu'à un site souhaité ;
h. placer le réservoir en forme de U sous la spar et ballaster vers le haut pour qu'il vienne en contact avec la spar ;
i. ballaster le vaisseau de levage lourd et le réservoir en forme de U vers le bas, pour provoquer la flottaison de la spar ;
j. séparer le réservoir en forme de U de la spar et déplacer le vaisseau de levage lourd et le réservoir en forme de U depuis le dessous de la spar ;
k. faire tourner la spar flottante de 180 degrés autour de son axe central ;
l. attacher le réservoir en forme de U à la deuxième extrémité de la spar et ballaster le réservoir en forme de U vers le haut pour réduire le tirant de la spar ; et
m. finir les virures autour de la spar.
